# EUROPEAN PATENT SPECIFICATION

(11) **EP 2 796 923 B1**
(45) Date of publication and mention of the grant of the patent: **28.11.2018**
(21) Application number: 14160579.0
(22) Date of filing: 18.03.2014
(51) Int. Cl.: G02F 1/1337

(54) **Method of manufacturing a liquid crystal display device**
Verfahren zur Herstellung einer Flüssigkristallanzeigevorrichtung
Procédé de fabrication de dispositif d'affichage à cristaux liquides

(30) Priority: 25.04.2013 KR 20130046229
(43) Date of publication of application: 29.10.2014
(73) Proprietor: Samsung Display Co., Ltd., Gyeonggi-do (KR)
(72) Inventor: Lee, Gak Seok, 349-2004 Hwaseong-si Gyeonggi-do (KR); Suh, Duck Jong, 101-2003, Geumcheon-gu Seoul (KR); Ahn, Hyunku, 342-702 Hwaseong-si Gyeonggi-do (KR); Kim, Kyoungtae, 105-1706 Osan-si Gyeonggi-do (KR); Lee, Taekjoon, Lux-1802 Hwaseong-si Gyeonggi-do (KR); Jeong, Seungyeon, 804-1204 Hwaseong-si Gyeonggi-do (KR)
(74) Representative: Dr. Weitzel & Partner

(56) References cited:
- WO-A1-2010/006419
- WO-A1-2010/006420
- WO-A1-2012/121321
- US-A1- 2010 015 363
- US-A1- 2012 081 652

## Description

### BACKGROUND

The present embodiments disclosed herein relate to a liquid crystal display device and a method of manufacturing the same, and more particularly, to a liquid crystal display device having high voltage maintenance ratio and less defects.

Liquid crystal display devices are classified into a twisted nematic liquid crystal display device, an in-plane switching mode liquid crystal display device, a vertical alignment mode liquid crystal display device, and the like according to the characteristic of the liquid crystal layer.

When an electric field is not applied in the vertical alignment type liquid crystal display device, liquid crystal molecules are aligned in a predetermined direction, and the long axes of the liquid crystal molecules are aligned vertically to a substrate. Thus, the vertical alignment mode liquid crystal display device has wide viewing angle and high contrast ratio.

In order to align liquid crystal molecules in a predetermined direction, a rubbing method, an optical alignment method, or the like may be used. In the vertical alignment mode liquid crystal display device, one of the optical alignment methods may align the liquid crystal molecules in a predetermined direction by using a reactive mesogen. The reactive mesogen is included in the liquid crystal layer in a non-cured state, and aligns the liquid crystal molecules through curing by irradiation of light.

WO 2010/006419 A1 describes the use of a reactive mesogen that exhibits a strong orientational correlation of those molecules with the liquid crystal molecules. In one embodiment a layer containing reactive mesogens is deposited with a preferential direction directly on the cell substrate or on the top of a support layer that is already deposited on the cell substrate and processed adequately to provide adhesion and initial alignment of the layer. After deposition on the cell substrate the layer is pre-cured and used to build the liquid crystal cells. In a similar manner reactive mesogens are used with the method described in WO 2010/006420 to realize a liquid crystal lens. Respective chemical compositions exhibiting reactive mesogens suitable for polymer alignment layers are described with US 2012/081652 A1 and WO 2012/121321 A1, respectively US 2013/342791.

As defined by the appended claims, the present embodiments provide methods of manufacturing liquid crystal display devices having a high response rate and high quality in which a stain in the low grey scale is improved.

Embodiments provide a liquid crystal display device including: a first substrate, a first alignment layer provided on the first substrate, a second substrate facing the first substrate, a second alignment layer provided on the second substrate, and a liquid crystal molecules. Each of the first alignment layer and the second alignment layer may include a base alignment layer, and an alignment forming layer provided on the base alignment layer, wherein the alignment forming layer comprises a derivative of a heat stabilizer and an alignment material comprising first functional group which is polymerized to initially align the liquid crystal molecules.

In some embodiments, the heat stabilizer may comprise at least one of alkylated monophenol, alkylthiomethylphenol, hydroquinone and alkylated hydroquinone, tocopherol, hydroxylated thiodiphenyl ether, alkylidene bisphenol, O-benzyl compounds, N-benzyl compounds and S-benzyl compounds, hydroxybenzylated malonate, aromatic hydroxybenzyl compounds, benzylphosphonate, acylaminophenol, monovalent or polyvalent alcohols, esters of β-(3,5-di-tertiary-butyl-4-hydroxyphenyl) propionic acid with monovalent or polyvalent alcohols, esters of β-(5-tert-butyl-4-hydroxy-3-methylphenyl) propionic acid with monovalent or polyvalent alcohols, esters of β-(3,5-dicyclohexyl-4-hydroxyphenyl) propionic acid with monovalent or polyvalent alcohols, esters of 3,5-di-tert-butyl-4hydroxyphenyl acetic acid with monovalent or polyvalent alcohols, amides of β-(3,5-di-tert-butyl-4-hydroxyphenyl) propionic acid, ascorbic acids, and amine heat stabilizers.

In other embodiments, the first functional group may be at least one of alkylated vinyl group including aliphatic alkyl group having 1 to 18 carbons, or alkylated cinnamoyl group including aliphatic alkyl group having 1 to 18 carbons.

In still other embodiments, the alignment material may further have a second functional group vertically aligning the liquid crystal molecules.

In even other embodiments, the liquid crystal display device may be manufactured by forming a first substrate, forming a second substrate, coating an alignment solution containing an alignment material having a first functional group, a heat stabilizer, and a solvent on each of the first and second substrates, removing the solvent contained in the alignment solution, forming a liquid crystal layer between the first substrate and the second substrate, and irradiating light to the first functional group to polymerize the first functional group.

In yet other embodiments, the heat stabilizer may be contained in an amount of more than 0 but not more than about 3% by weight based on the weight of the alignment solution.

### BRIEF DESCRIPTION OF THE DRAWINGS

The accompanying drawings are included to provide a further understanding of the present embodiments, and are incorporated in and constitute a part of this specification. The drawings illustrate example embodiments and, together with the description, serve to explain principles of the present embodiments. In the drawings:
FIG. 1 is a partial plane view of a liquid crystal display device having a plurality of pixels according to an embodiment;
FIG. 2 is a cross-sectional view taken along line I-I' of FIG. 1;
FIG. 3 is a flow diagram illustrating a method of manufacturing a display device according to an embodiment;
FIG. 4 is a graph showing the content of non-reacted reactive mesogen with temperature in a relative value;
FIG. 5 is a graph showing the content of non-reacted reactive mesogen in a relative value in each step;
FIG. 6 is a graph showing the content of non-reacted reactive mesogen and the pretilt angle with the content of a heat stabilizer;
FIG. 7 is a graph showing the reaction rate with the content of non-reacted reactive mesogen in a final display device; and
FIG. 8 is a graph showing an average slope in a voltage (V)-transmittance (T) curve with the content of non-reacted reactive mesogen.

### DETAILED DESCRIPTION

As the present embodiments allow for various changes and numerous embodiments, particular embodiments will be illustrated in the drawings and described in detail in the written description. However, this is not intended to limit the present embodiments to particular modes of practice, and it is to be appreciated that all changes, equivalents, and substitutes that do not depart from the technical scope of the present embodiments are encompassed in the present embodiments.

Like reference numerals in the drawings denote like elements. In the accompanying drawings, the dimensions of structures are exaggerated for clarity. While such terms as 'first', 'second', and the like may be used to describe various elements, such elements should not be limited to the above terms. The above terms are used only to distinguish one element from another. For example, a first element may be referred to as a second element without departing from the scope of rights of the present embodiments, and likewise a second element may be referred to as a first element. The terms of a singular form may include plural forms unless referred to the contrary.

In the present specification, it is to be understood that the terms such as "including" or "having," etc., are intended to indicate the existence of the features, numbers, steps, actions, elements, parts, or combinations thereof disclosed in the specification, and are not intended to preclude the possibility that one or more other features, numbers, steps, actions, elements, parts, or combinations thereof may exist or may be added. In the description, it will be understood that when an element such as a layer, film, region, or substrate is referred to as being "above" or "on" another element, it can be directly on the other element or intervening elements may also be present. On the contrary, it will be understood that when an element such as a layer, film, region, or substrate is referred to as being "above" or "on" another element, it can be directly on the other element or intervening elements may also be present.

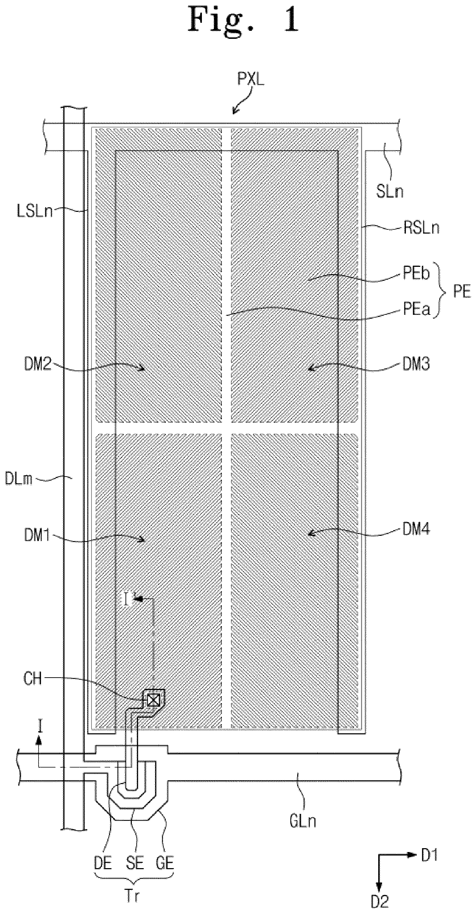

FIG. 1 is a partial plane view of a liquid crystal display device having a plurality of pixels according to an embodiment.

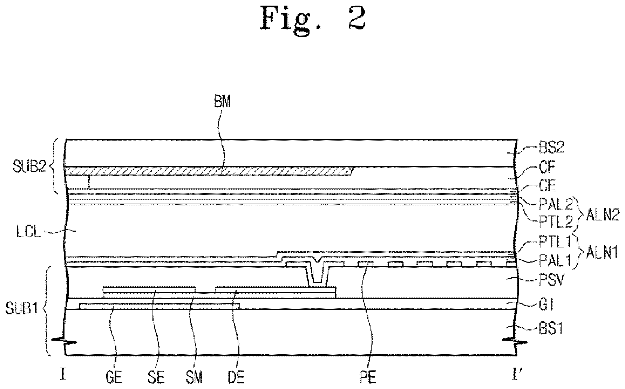

FIG. 2 is a cross-sectional view taken along line I-I' of FIG. 1.

Referring to FIGS. 1 and 2, the display device includes a first substrate SUB1, a first alignment layer ALN1 provided on the first substrate SUB1, a second substrate SUB2 facing the first substrate SUB1, a second alignment layer ALN2 provided on the second substrate SUB2, and a liquid crystal layer LCL formed between the first alignment layer ALN1 and the second alignment layer ALN2.

The first substrate SUB1 includes a first base substrate BS1, a plurality of gate lines GLn, a plurality of data lines DLm, and a plurality of pixels PXL.

In FIGS. 1 and 2, an n-th gate line GLn among the plurality of gate lines, an m-th data line among the plurality of data lines, and one pixel are illustrated for convenience of description. However, in the liquid crystal display device according to an embodiment, the remaining pixels have a similar structure to the above pixel, and hereinafter the n-th gate line GLn and the m-th data line DLm are referred to as a gate line and a data line, respectively.

The first base substrate BS1 has an approximately rectangular shape, and is made of a transparent insulation material.

The gate line GLn is formed extending in a first direction D1 on the base substrate BS1. The data line DLm is provided extending in a second direction D2 crossing the first direction D1 with a gate insulation layer GI therebetween. The gate insulation layer GI is provided on the entire surface of the first base substrate BS1 to cover the gate line GLn.

Each of the pixels PXL is connected to the corresponding gate line GLn among the gate lines, and the corresponding data line DLm among the data lines. Each of the pixels PXL includes a thin film transistor Tr, a pixel electrode PE connected to the thin film transistor Tr, and a storage electrode part. The thin film transistor Tr includes a gate electrode GE, a gate insulation layer GI, a semiconductor pattern SM, a source electrode SE, and a drain electrode DE. The storage electrode part further includes a storage line SLn extending in the first direction D1, and first and second branch electrodes LSLn and RSLn which are branched from the storage line SLn and extends in the second direction D2.

The gate electrode GE is protruded from the gate line GLn or is provided on a portion of the gate line GLn.

The gate electrode GE may comprise a metal. The gate electrode GE may comprise nickel (Ni), chromium (Cr), molybdenum (Mo), aluminum (Al), titanium (Ti), copper (Co), tungsten (W), and alloys thereof. The gate electrode GE may be formed in a single layer or a multilayer using the above-described metal. For example, the gate electrode GE may have a triple layered structure comprised of a Mo layer, an Al layer and a Mo layer sequentially stacked, or a dual layered structure comprised of a Ti layer and a Cu layer sequentially stacked. Alternatively, the gate electrode GE may have a single layer structure comprising an alloy of Ti and Cu.

The semiconductor pattern SM is provided on the gate insulation layer GI. The semiconductor pattern SM is provided on the gate electrode GE with the gate insulation layer therebetween. The semiconductor pattern SM partially overlaps the gate electrode SE. The semiconductor pattern SM includes an active pattern (not shown) provided on the gate insulation layer GI, and an ohmic contact layer (not shown) formed on the active pattern. The active pattern may comprise an amorphous silicon thin film, and the ohmic contact layer may comprise an n+ amorphous silicon thin film. The ohmic contact layer forms an ohmic contact between the active pattern, and the source electrode SE and the drain electrode DE.

The source electrode SE is branched from the data line DLm. The source electrode SE is formed on the ohmic contact layer and partially overlaps the gate electrode GE.

The drain electrode DE is provided spaced apart from the source electrode SE, with the semiconductor pattern SM in between. The drain electrode DE is formed on the ohmic contact layer to partially overlap the gate electrode GE.

The source electrode SE and the drain electrode DE may comprise nickel (Ni), chromium (Cr), molybdenum (Mo), aluminum (Al), titanium (Ti), copper (Co), tungsten (W), and alloys thereof. The source electrode SE and the drain electrode DE may be formed in a single layer or multilayer using the above-described metal. For example, the source electrode SE and the drain electrode DE may have a dual layered structure comprised of a Ti layer and a Cu layer sequentially stacked. Alternatively, the source electrode SE and the drain electrode DE may have a single layer structure comprising an alloy of Ti and Cu.

Thus, an upper surface of the active pattern between the source electrode SE and the drain electrode DE is exposed, and becomes a channel part forming a conductive channel between the source electrode SE and the drain electrode DE according to whether or not a voltage is applied to the gate electrode GE. The source electrode SE and the drain electrode DE partially overlap the semiconductor layer SM at a region except for the channel part which is formed between the source electrode SE and the drain electrode DE.

The pixel electrode PE is connected to the drain electrode DE with a passivation layer PSV therebetween. The pixel electrode PE partially overlaps the storage line SLn and the first and second branch electrodes LSLn and RSLn to form a storage capacitor.

The passivation layer PSV covers the source electrode SE, the drain electrode DE, the channel part, and the gate insulation layer GI, and has a contact hole CH exposing a portion of the drain electrode DE. The passivation layer PSV may include, for example, silicon nitride or silicon oxide.

The pixel electrode PE is connected to the drain electrode DE through the contact hole CH formed in the passivation layer PSV.

The pixel electrode PE includes a stem part PEa, and a plurality of branch parts PEb which are protruded radially from the stem part Pea and extend. A portion of the stem part PEa or the branch parts PEb is connected to the drain electrode DE through the contact hole CH.

The stem part PEa may be provided in various shapes, for example, in a cross shape as illustrated in the above-described embodiment. In this case, the pixel PXL is divided into a plurality of domains by the stem part PEa, and the branch parts PEb may extend in different directions every domain, corresponding to the respective domains. In the above-described embodiment, there is illustrated an example in which the pixel is comprised of first to fourth domains DM1, DM2, DM3, and DM4. The plurality of branch parts PEb are spaced apart from one another such that they do not meet with the adjacent branch parts PEb, and extend in a parallel direction to one another with the region divided by the stem part PEa.

In the branch parts PEb, the adjacent branch parts PEb are spaced apart by a distance of micrometer unit, and the spaced distance corresponds to means for aligning the liquid crystal molecules of the liquid crystal layer LCL in a specific orientation angle on a plane which is parallel to the base substrate.

The pixel electrode PE comprises a transparent conductive material. In particular, the pixel electrode PE comprises a transparent conductive oxide. The transparent conductive oxide may include indium tin oxide (ITO), indium zinc oxide (IZO), indium tin zinc oxide (ITZO), and the like.

The first alignment layer ALN1 is provided on the pixel electrode PE so as to pretilt the liquid crystal molecules of the liquid crystal layer LCL.

The first alignment layer ALN1 includes a first initial alignment layer PAL1 provided on the pixel electrode PE, and a first alignment forming layer PTL1 provided on the first initial alignment layer PAL1.

The first initial alignment layer PAL1 may comprise polymer, such as polyimide, polyamic acid, polyamide, polyamicimide, polyester, polyethylene, polyurethane, or polystyrene, or mixtures thereof. The first initial alignment layer PAL1 may be initially aligned using a rubbing method or an optical alignment method.

The first alignment forming layer includes an alignment material having a first functional group which is polymerized to initially align liquid crystal molecules of a liquid crystal layer to be described later and a second functional group for vertically aligning the liquid crystal molecules.

The first functional group is a portion of the first alignment layer ALN1 which is polymerized to substantially align the liquid crystal molecules, and may be a reactive mesogen. The term "reactive mesogen" means light curable particles, i.e., photocrosslinkable low molecular or high molecular copolymer, and causes a chemical reaction, such as polymerization occurs when light having a specific wavelength, for example, ultraviolet ray is irradiated to the reactive mesogen. The reactive mesogen may be comprised of an acrylate group, a methacrylate group, an epoxy group, an oxetane group, a vinyl-ether group, a styrene group, or a thiolene group, and is partially crosslinked by polymerization to pretilt liquid crystal molecules so as to have a predetermined tilt angle with respect to a surface of the first or second substrate.

In an embodiment, the reactive mesogen may be at least one of alkylated vinyl group including aliphatic alkyl group having 1 to 18 carbons, or alkylated cinnamoyl group including aliphatic alkyl group having 1 to 18 carbons.

For example, the reactive mesogen can be 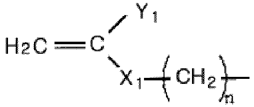 (where n is 1 to 18, X₁ is an alkyl group, an ether group (-O-), or an ester group (-COO-), and Y₁ is a methyl group or hydrogen), or 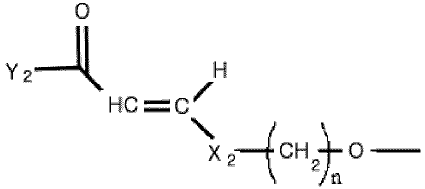 (where n is 1 to 18, X₂ is a methyl group, an ether group, an ester group, a phenyl group, a cyclohexyl group, or a phenylester group, and Y₂ is at least one of an alkyl group having 1 to 10 carbons, a phenyl group, a biphenyl group, a cyclohexyl group, a bicyclohexyl group, or a phenylcyclohexyl group.

The second functional group may be at least one of an alkoxy group including an aliphatic alkyl group having 1 to 25 carbons, a cholesteric group, an alicyclic group including an aliphatic alkyl group having 1 to 10 carbons, or an aromatic group including an aliphatic alkyl group having 1 to 10 carbons.

According to an embodiment, the first alignment layer ALN1 contains a derivative of the heat stabilizer. The derivative of the heat stabilizer means a byproduct which is generated while the heat stabilizer forms the first alignment layer ALN1 and the second alignment layer ALN2, for example, a resulting material obtained by reacting with ions or radicals.

The heat stabilizer may be at least one of alkylated monophenol, alkylthiomethylphenol, hydroquinone and alkylated hydroquinone, tocopherol, hydroxylated thiodiphenyl ether, alkylidene bisphenol, O-benzyl compounds, N-benzyl compounds and S-benzyl compounds, hydroxybenzylated malonate, aromatic hydroxybenzyl compounds, benzylphosphonate, acylaminophenol, monovalent or polyvalent alcohols, esters of β-(3,5-di-tertiary-butyl-4-hydroxyphenyl) propionic acid with monovalent or polyvalent alcohols, esters of β-(5-tert-butyl-4-hydroxy-3-methylphenyl) propionic acid with monovalent or polyvalent alcohols, esters of β-(3,5-dicyclohexyl-4-hydroxyphenyl) propionic acid with monovalent or polyvalent alcohols, esters of 3,5-di-tert-butyl-4hydroxyphenyl acetic acid with monovalent or polyvalent alcohols, amides of β-(3,5-di-tert-butyl-4-hydroxyphenyl) propionic acid, ascorbic acids, and amine heat stabilizers.

The heat stabilizer will now be described in further detail.
(1) Alkylated monophenol, for example, 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-di-cyclophentyl-4-methylphenol, 2-(α-methylcyclohexyl)-4,6-dimethylphenol, 2,6-di-octadecyl-4-methylphenol, 2,4,6-tricyclohexylphenol, 2,6-di-tert-butyl-4-methoxymethylphenol, nonylphenol branched from a linear chain or a side chain, such as 2,6-di-nonyl-4-methylphenol, 2,4-dimethyl-6-(1'-methyl-undec-1'-yl)-phenol, 2,4-dimethyl-6-(1'-methyl-heptadec-1'-yl)-phenol, 2,4-dimethyl-6-(1'-methyltridec-1'-yl)-phenol, or mixtures thereof.
(2) Alkylthiomethylphenol, for example, 2,4-di-octylthiomethyl-6-tertbutylphenol, 2,4-di-octylthiomethyl-6-methylphenol, 2,4-dioctylthiomethyl-6-ethylphenol, or 2,6-di-dodecylthiomethyl-4-nonylphenol.
(3) Hydroquinone and alkylated hydroquinone, for example, 2,6-di-tert-butyl-4-methyoxyphenol, 2,5-di-tert-butyl-hydroquinone, 2,5-di-tert-amylhydroquinone, 2,6-diphenyl-4-octadecyloxyphenol, 2,6-di-tert-butyl-hydroquinone, 2,5-di-tert-butyl-4-hydroxyanisole, 3,5-di-tert-butyl-4-hydroxyanisole, 3,5-di-tert-butyl-4-hydroxyphenyl stearate, or bis(3,5-di-tert-butyl-4-hydroxyphenyl)adipate.
(4) Tocopherol, for example, α-tocopherol, β-tocopherol, γ-tocopherol, δ-tocopherol, or mixtures thereof.
(5) Hydroxylated thiophenyl ether, for example, 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), or 4,4'-bis(2,6-dimethyl-4-hydroxyphenyl)disulfide.
(6) Alkylidenebisphenol, for example, 2,2'-methylenebis(6-tert-butyl-4-methylphenol), 2,2'-methylenebis(6-tert-butyl-4-ethylphenol), 2,2'-methylenebis[4-methyl-6-cyclohexylphenol), 2,2'-methylenebis(6-nonyl-4-methylphenol), 2,2'-methylenebis(4,6-di-tertbutylphenol), 2,2'-ehtylidenebis(4,6-di-tert-butylphenol), 2,2'-ehtylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecyl mercapto butane, ethylene glycolbis[3,3-bis(3'-tert-butyl-4'-hydroxyphenyl)butyrate], bis(3-tert-butyl-4-hydroxy-5-methylphenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)-propane, 2,2-bis(5-tert-butyl-4-hydroxy-2-methylphenyl)-4-n-dodecyl mercaptor butane, or 1,1,5,5-tetra(5-tert-butyl-4-hydroxy-2-methylphenyl)pentane.
(7) O-benzyl compounds, N-benzyl compounds and S-benzyl compounds, for example, 3,5,3',5'-tetra-tert-butyl-4,4'-dihydroxy-dibenzylether, octadecyl-4-hydroxy-3,5-dimethyl mercaptoracetate, tridecyl-4-hydroxy-3,5-di-tert-butylbenzyl mercaptoracetate, tris(3,5-di-tert-butyl-4-hydroxybenzyl)amine, bis(4-tert-butyl-3-hydroxy-2,6-dimethylbenzyl)dithioterephthalate, or bis(3,5-di-tert-butyl-4-hydroxybenzyl)sulfide, isooctyl-3,5-di-tert-butyl-4-hydroxybenzyl mercaptoracetate.
(8) Hydroxybenzylated malonate, for example, dioctadecyl-2,2-bis(3,5-di-tert-butyl-2-hydroxybenzyl)malonate, di-octadecyl-2-(3-tert-butyl-4-hydroxy-5-methylbenzyl)-malonate, di-dodecyl mercaptoethyl-2'2-bis(3,5-di-tert-butyl-4-hydroxybenzyl)malonate, or bis-[4-(1,1,3,3-tetramethylbutyl)phenyl]-2,2-bis(3,5-di-tert-butyl-4-hydroxybenzyl)malonate.
(9) Aromatic hydroxybenzyl compounds, for example, 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, or 2,4,6-tris(3,5-di-tert-butyl-4-hydroxybenzyl)phenol.
(10) Triazine compounds, for example, 2,4-bis(octylmercaptor)-6-(3,5-di-tert-butyl-4-hydroxyanilino)-1,3,5-triazine, 2-octylmercaptor-4,6-bis(3,5-di-tert-butyl-4-hydroxyanilino)-1,3,5-triazine, 2-octylmercaptor-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)hexahydro-1,3,5-triazine, or 1,3,5-tris(3,5-dicyclohexyl-4-hydroxybenzyl)isocyanurate.
(11) Benzyl phosphonate, for example, dimethyl-2,5-di-tert-butyl-4-hydroxybenzylphophonate, diethyl-3,5-di-tert-butyl-4-hydroxybenzylphosphonate, dioctadecyl-2,5-di-tert-butyl-4-hydroxybenzylphosphonate, dioctadecyl-5-tert-butyl-4-hydroxy-3-methylbenzylphosphonate, or calcium salts of monoethyl ester of 3,5-di-tert-butyl-4-hydroxybenzyl-phosphonic acid.
(12) Acylaminophenol, for example, 4-hydroxylauranilide, 4-hydroxystearanilide, octylN-(3,5-di-tert-butyl-4-hydroxyphenyl)carbamate.
(13) Monovalent or polyvalent alcohols and esters of β-(3,5-di-tert-butyl-4-hydroxyphenyl)-propionic acid. Examples of the monovalent or polyvalent alcohols include methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, NN'-bis(hydroxyehtyl)oxamide, 3-thiaundecanol, 3-thiapentadecanol, trimethylhexanediol, trimethylolpropane, and 4-hydroxymethyl-1 -pho spha-2,6,7-trioxabicyclo [2.2.2] octane.
(14) Monovalent or polyvalent alcohols and esters of β-(5-di-tert-but-4-hydroxy-3-methylphenyl)-propionic acid. Examples of the monovalent or polyvalent alcohols include methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, NN'-bis(hydroxyehtyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane, and 3,9-bis[2-{3-(3-tert-butyl-4-hydroxy-5-methylphenyl)propionyloxy}-1,1-dimethylethyl]-2,4,8,10-tetraoxaspiro[5.5]-undecane.
(15) Monovalent or polyvalent alcohols and esters of β-(3,5-dicyclohexyl-4-hydroxyphenyl)-propionic acid. Examples of the monovalent or polyvalent alcohols include methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, NN'-bis(hydroxyehtyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
(16) Monovalent or polyvalent alcohols and esters of 3,5-di-tert-butyl-4-hydroxyphenyl acetic acid. Examples of the monovalent or polyvalent alcohols include methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, NN'-bis(hydroxyehtyl)oxamide, 3-thiaundecanol, 3-thiapentadecanol, trimethylhexanediol, trimethylolpropane, 4-hydroxymethyl-1-phospha-2,6,7-trioxabicyclo[2.2.2] octane.
(17) Amides of β-(3,5-di-tert-butyl-4-hydroxyphenyl)propionic acid, for example, N,N'-bis(3,5-di-tert-butyl-4-hydroxyphenylpropionic acid)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropyonyl)hydrazide, or N,N'-bis[2-3-[3,5-di-tert-butyl-4-hydroxyphenyl]propyonyloxy]ethyl]oxamide (Naugard®XL-1, supplied by Uniroyal Chemical).
(18) Ascorbic acid (Vitamin C)
(19) Amine heat stabilizers, for example, N,N'-di-isopropyl-p-phenylenediamine, N,N'-di-sec-butyl-P-phenylenediamine, N, bis(1,4-dimethylpentyl)-p-phenylenediamine, N,N'-bis(1-ethyl-3 -methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-P-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)-diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, such as p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl -4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tertiary-octylated N-phenyl-1-naphthylamine, mixtures of mono- and dialkylated tertiary butyl/tertiary octyl diphenylamine, mixtures of mono- and dialkylated nonyldiphenylamine, mono- and dialkylated nonyldiphenylamine, mixtures of mono- and dialkylated dodecyldiphenylamine, mixtures of mono- and dialkylated isopropyl/isohexyldiphenylamine, mixtures of mono- and dialkylated tertiary butyl diphenyl amine, 2,3-di-hydro-3,3-dimethyl-4H-1,4-benzothiazine, phenothiazine, mixtures of mono- and dialkylated tertiary butyl/tertiary octylphenothiazine, mixtures of mono- and dialkylated tertiary octyl-phenothiazine, N-allylphenothiazine, N,N,N',N'-tetraphenyl-1,4-diaminobut-2-en, N,N-bis(2,2,6,6-tetramethylpiperide-4-yl-hexamethylenediamine, bis(2,2,6,6-tetramethylpiperidin-4-yl)sebacate, 2,2,6,6-tetramethylpiperidine-4-one, or 2,2,6,6-tetramethylpiperidine-4-ol.

Commercially available products may be used as the heat stabilizers. Commercially available heat stabilizers are as follows, and at least one type of the below-described heat stabilizers may be used.

2,2'-Thiodiethylene bis[3-(3,5-di-t-butyl-4-hydroxyphenyl)propionate] available as ANOX® 70(CAS 41484-35-9), 1,3,5-trimethyl-2,4,6-tris (3,5-di-tert-4-hydroxybenzyl) benzene available as ANOX® 330(CAS 1709-70-2), a C13-C15 alkyl ester of 3,5-bis(1,1-dimethylethyl)-4-hydroxy-benzenepropanoic acid available as ANOX® 1315(CAS 171090-93-0), a C13-C15 alkyl ester of 3,5-bis(1,1-dimethylethyl)-4-hydroxybenzenepropanoic acid available as ANOX® PP18(CAS 2082-79-3), 1,3,5-tris(4-tert.-butyl-3-hydroxy-2,6-dimethylbenzyl)-1,3,5-triazine-2,4,6-(1H,3H,5H)-trione available as LOWINOX® 1790(CAS 40601-76-1), 2,2'-methylenebis(6-t-butyl-4-methylphenol) available as LOWINOX® 22M46(CAS 119-47-1), 1,1-bis(2-methyl-4-hydroxy-5-tert-butylphenyl)butane available as LOWINOX® 44B25(CAS 85-60-9), 1,1,3-tris(2'-methyl-4'-hydroxy-5'-t- butylphenyl)butane available as LOWINOX® CA22(CAS 1843-03-4), a butylated reaction product of p-cresol and dicyclopentadiene available as LOWINOX® CPL(CAS 68610-51-5), triethyleneglycol-bis[3-(3-t-butyl-4-hydroxy-5-methyphenyl)propionate] available from LOWINOX® GP45(CAS 36443-68-2), N,N'-hexamethylene bis[3-(3,5-di-t-butyl-4-hydroxyphenyl)propionamide available as LOWINOX® HD98(CAS 23128-74-7), 2,2'-thiobis(6-t-butyl-4-methylphenol) available as LOWINOX® TBP6(CAS 90-66-4), F2,2' methylenebis[4-methyl-6-(1-methyl-cyclohexyl)phenol] available as LOWINOX® WSP(CAS 77-62-3), 2,2'-methylenebis (6-nonyl-p-cresol) available as NAUGARD® 536(CAS 7786-17-6).

The first base alignment layer PAL1 and the first alignment forming layer PTL1 are comprised of a plurality of regions which are aligned corresponding to the first to fourth domains DM1, DM2, DM3, and DM4 of the pixel electrode PE. In the above-described embodiment, the plurality of regions are comprised of, for example, first to fourth regions, and the liquid crystal molecules are aligned in different directions from one another in the domains DM1, DM2, DM3, and DM4 corresponding to the first to fourth regions.

The second substrate SUB2 includes a second insulation substrate INS2, a color filter layer CF, and a black matrix BM.

The color filter CF is formed on the second base substrate BS2 and provides colors to light that passes through the liquid crystal layer LCL. While the above-described embodiment illustrates that the color filter CF is formed on the second substrate SUB2, the present embodiments are not limited thereto, and the color filter CF may be provided on the first substrate SUB1 instead of the second substrate SUB2 in another embodiment.

The black matrix BM is formed corresponding to a light shielding region of the array substrate. The light shielding region may be defined as a region where the data line DLm, the thin film transistor Tr and the gate line GLn are formed. Since the pixel electrode PE is generally not formed on the light shielding region, liquid crystal molecules are not aligned and thus light leakage may occur. Therefore, the black matrix BM is formed on the light shielding region to prevent light leakage.

The common electrode CE is formed on the color filter CF, and form an electric field together with the pixel electrode PE to operate the liquid crystal layer LCL. The common electrode CE may comprise a transparent conductive material. The common electrode CE may comprise, for example, a conductive metal oxide, such as indium tin oxide (ITO), indium zinc oxide (IZO), indium tin zinc oxide (ITZO), or the like.

The second alignment layer ALN2 is provided on the common electrode CE so as to pretilt the liquid crystal molecules of the liquid crystal layer LCL.

The second alignment layer ALN2 includes a second initial alignment layer PAL2 provided on the common electrode CE, and a second alignment forming layer PTL2 provided on the second initial alignment layer PAL2.

The second alignment layer PTL2 may comprise the same material as or a different material from the first alignment forming layer PTL1.

In an embodiment, while the first alignment layer ALN1 and the second alignment layer ALN2 may be all formed so as to include the initial alignment layer and the alignment forming layer, the present embodiments are not limited thereto, and the first alignment layer ALN1 and/or the second alignment layer ALN2 may be formed in a single alignment layer.

The liquid crystal layer LCL including liquid crystal molecules is provided between the first substrate SUB1 and the second substrate SUB2. While the liquid crystal layer LCL may have a negative dielectric anisotropy, the present embodiments are not limited thereto, and the liquid crystal layer LCL may have a positive dielectric anisotropy.

In the above-described display device, when a gate signal is applied to the gate line GLn, the thin film transistor Tr is turned on. Therefore, a data signal applied to the data line DLm is applied to the pixel electrode PE via the thin film transistor Tr. When the thin film transistor Tr is turned on and thus the data signal is applied to the pixel electrode PE, an electric field is formed between the pixel electrode PE and the common electrode CE. The liquid crystal molecules are driven by the electric field which is generated by a difference in voltages applied to the common electrode CE and the pixel electrode PE. Thus, the amount of light that passes through the liquid crystal layer LCL is changed, so that an image is displayed.

Display devices according to embodiments may have various pixel structures. For example, in another embodiment, two gate lines and one data line may be connected to one pixel, and in still another embodiment, one gate line and two data lines may be connected to one pixel. Alternatively, one pixel may have two sub-pixels to which two different voltages are applied. In this case, a high voltage may be applied to one sub-pixel and a low voltage may be applied to the other sub-pixel. Also, while an embodiment discloses a structure in which a pixel electrode has a plurality of fine slits and a common electrode is formed in a cylindrical plate, the present embodiments are not limited thereto. For example, a domain partitioning means partitioning each pixel into a plurality of domains, for example, a slit or a protrusion may be provided to the pixel electrode and the common electrode.

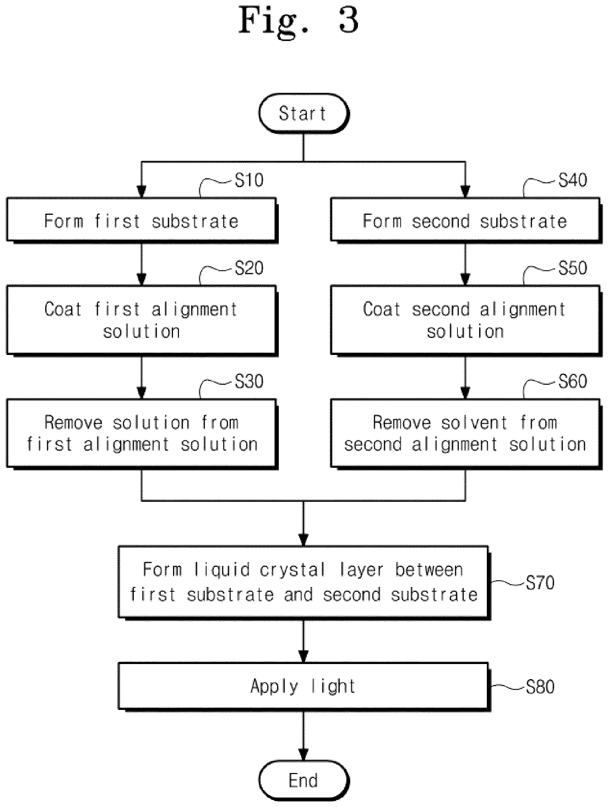

FIG. 3 is a flow diagram illustrating a method of manufacturing a display device according to an embodiment.

Referring to FIG. 3, in order to manufacture a display device according to an embodiment, a first substrate is formed (S10), a first alignment solution is coated on the first substrate (S20), and a solvent is removed from the first alignment solution to form a first alignment layer (S30). Separately from this, a second substrate is formed (S40), a second alignment solution is coated on the second substrate (S50), and a solvent is removed from the second alignment solution to form a second alignment layer (S60). Next, a liquid crystal layer is interposed between the first substrate and the second substrate to form a liquid crystal panel (S70). Thereafter, light is applied to the liquid crystal panel to react the first alignment layer with a first functional group in the second alignment layer (S80).

Hereinafter, a method of manufacturing a display device according to an embodiment will be described in detail with reference to FIGS. 1 and 2.

First, an step of forming a first substrate by forming a pixel electrode, and the like on a first base substrate will be described.

A gate patter is formed on the first base substrate BS1. The gate pattern includes the gate line GLn and a storage electrode part.

The gate pattern may be formed by using a photolithography process.

A gate insulation layer GI is formed on the gate pattern.

A semiconductor layer SM is formed on the gate insulation layer GI. The semiconductor layer SM may include an active pattern and an ohmic contact layer formed on the active pattern. The semiconductor layer SM may be formed by using a photolithography process.

A data pattern is formed on the semiconductor layer SM. The data pattern includes the data line DLm, the source electrode SE, and the drain electrode DE. The data pattern may be formed by using a photolithography process. In this regard, the semiconductor layer SM and the data pattern may be formed by using one sheet of half mask or diffraction mask.

A passivation layer PSV is formed on the data pattern. The passivation layer PSV has a contact hole CH exposing a portion of the drain electrode DE, and may be formed by using a photolithography process.

The pixel electrode PE, which is connected to the drain electrode DE through the contact hole CH is formed on the passivation layer PSV. The pixel electrode PE may be formed by using a photolithography process.

Next, a first alignment layer ALN1 is formed on the first substrate in which the pixel electrode PE and the like are formed. The first alignment layer ALN1 is formed by coating a first alignment solution on the first substrate SUB10 and removing a solvent from the first alignment solution.

The first alignment solution includes an alignment material having a first functional group and a second functional group, a heat stabilizer, and a solvent. The alignment material may be polymerized to include a polymer precursor, such as polyimide, polyamic acid, polyamide, polyamicimide, polyester, polyethylene, polyurethane, or polystyrene, or mixtures thereof, and the first functional group and the second functional group may be connected to the polymer precursor or a mixture thereof in the form of a side chain.

The first functional group is a portion of the first alignment layer ALN1 which is polymerized to substantially align the liquid crystal molecules, and may be a reactive mesogen. The term "reactive mesogen" means light curable particles, i.e., photocrosslinkable low molecular or high molecular copolymer, and causes a chemical reaction, such as polymerization occurs when light having a specific wavelength, for example, ultraviolet is irradiated to the reactive mesogen. The reactive mesogen may be comprised of an acrylate group, a methacrylate group, an epoxy group, an oxetane group, a vinyl-ether group, a styrene group, or a thiolene group, and is partially crosslinked by polymerization to pretilt liquid crystal molecules so as to have a predetermined tilt angle with respect to a surface of the first or second substrate.

In an embodiment, the reactive mesogen may be a compound represented by formula 1.

The second functional group may be at least one of an alkoxy group including an aliphatic alkyl group having 1 to 25 carbons, a cholesteric group, an alicyclic group including an aliphatic alkyl group having 1 to 10 carbons, or an aromatic group including an aliphatic alkyl group having 1 to 10 carbons.

The heat stabilizer is an antioxidant for preventing a reaction of the first functional group, in particular, an oxidation, and may be at least one of alkylated monophenol, alkylthiomethylphenol, hydroquinone and alkylated hydroquinone, tocopherol, hydroxylated thiodiphenyl ether, alkylidene bisphenol, O-benzyl compounds, N-benzyl compounds and S-benzyl compounds, hydroxybenzylated malonate, aromatic hydroxybenzyl compounds, benzylphosphonate, acylaminophenol, monovalent or polyvalent alcohols, esters of β-(3,5-di-tertiary-butyl-4-hydroxyphenyl) propionic acid with monovalent or polyvalent alcohols, esters of β-(5-tert-butyl-4-hydroxy-3-methylphenyl) propionic acid with monovalent or polyvalent alcohols, esters of β-(3,5-dicyclohexyl-4-hydroxyphenyl) propionic acid with monovalent or polyvalent alcohols, esters of 3,5-di-tert-butyl-4hydroxyphenyl acetic acid with monovalent or polyvalent alcohols, amides of β-(3,5-di-tert-butyl-4-hydroxyphenyl) propionic acid, ascorbic acids, and amine heat stabilizers.

Any solvent may be used for the above-described solvent if it mixes with the alignment material and the heat stabilizer to form the alignment material, and the type of the solvent is not particularly limited.

The solvent may be removed by applying heat to the first alignment solution. In this case, the alignment material in the first alignment layer is cured by heat, so that the first alignment layer ALN1 including a first base alignment layer PAL1 and a first alignment forming layer PTL1 is formed.

The heating may be performed in a single step, or may include a first baking step and a second baking step which are performed at different temperatures. The first baking operation may be performed in a temperature range of about 50°C to about 100°C, and the second baking step may be performed in a temperature range of about 180°C to about 250°C. At least a portion of the solvent in the alignment solution is removed through the first baking step, and the polymer precursor is polymerized through the second baking step. Although most of the solvent may be removed in the first baking step, the solvent remaining after the first baking step may be removed in the second baking step. Also, although the polymer precursor may be polymerized to form a polymer in the second baking step, a portion of the polymer precursor may be polymerized in the first baking step. While the solvent is removed through the first baking step and the second baking step, and the polymer is formed, a portion including the first functional group and the second functional group move in an upper direction and a portion not including the first functional group or the second functional group moves in a lower direction. As a result, the first base alignment layer PAL1 comprised of the polymer, and the first alignment forming layer PTL1 having the first functional group or the second functional group are separated.

While the solvent in the first alignment solution is removed, the first functional group may react. In particular, when heat energy is applied to the first alignment solution, organic materials in the alignment material, for example, polymer materials constituting the base alignment layer, may be oxidized by the heat energy to form radicals or ions. The radicals and/or ions may react with the first functional group and thus the first functional group is consumed. The first functional group plays a role in initially aligning the liquid crystal molecules by being polymerized by light later. However, in the case where the first functional group is consumed by the ions and/or radicals, the amount of the first functional group which is polymerized by light later decreases, so that an initial alignment force is reduced.

Since the heat stabilizer reacts with the ions and/or radicals before the ions and/or radicals react with the reactive mesogen, the reactive mesogen may be prevented from being consumed. The heat stabilizer acts as an H donor or a radical scavenger to thus prevent other liquid crystal molecules from reacting with the radical or ion. For example, when an instable free radical, such as a peroxide radical, is generated, the heat stabilizer reacts with the peroxide radical such that an additional radical chain reaction with other liquid crystal molecules does not occur.

Formula 1 shows a process in which organic materials are oxidized to form a radical, and a reaction between the generated peroxide radical and a phenol-based heat stabilizer. 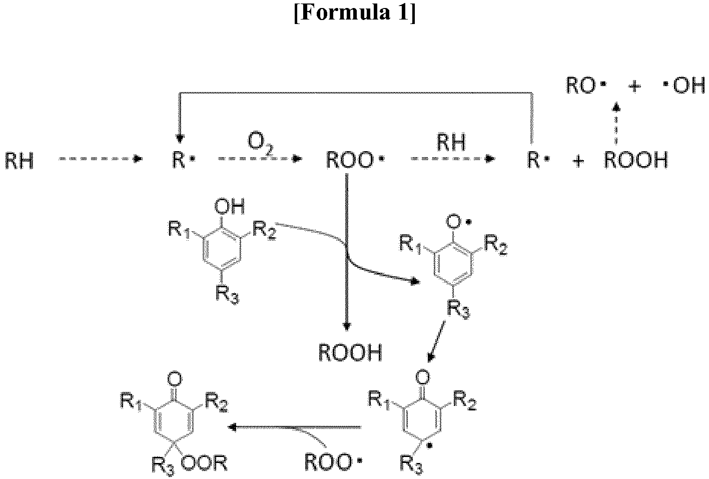 where R is a functional group, which is set so as to show generation of peroxide and is allowable if the functional group is simply linked to peroxide generated in the alignment layer, for example alkyl group having 1 to 12 carbons, and is not particularly limited. Also, R1 to R3 are substituent groups (e.g., alkyl groups having 1 to 12 carbons), which are linked to phenol, and are not particularly limited. For example, R1 and R2 are tertiary butyl groups, respectively, and R3 is a methyl group.

The heat stabilizer is higher in reactivity with the ions and/or radicals than the reactive mesogen, and may be selected variously according to the type of the reactive mesogen.

The heat stabilizer is modified into the above-described derivative of the heat stabilizer. According to an embodiment, the heat stabilizer which is initially included in the first alignment solution may be completely consumed in the course of curing the alignment solution, and in this case, the heat stabilizer is not contained in the first alignment layer that is a final resulting material and only the derivative of the heat stabilizer remains.

According to an embodiment, the first alignment solution may contain the heat stabilizer to such an amount that the heat stabilizer reacts with the ion or radical, is completely consumed and does not finally remain in the first alignment layer. For example, the heat stabilizer may be contained in an amount of more than 0 but not more than about 3% by weight based on the weight of the first alignment solution.

Next, the forming of the second substrate SUB2 will be described.

A color filter CF displaying colors is formed on the second base substrate SUB2. A common electrode CE is formed on the color filter CF. The color filter CF and the common electrode CE may be formed by various methods, for example, by using a photolithography process.

Thereafter, a second alignment layer ALN2 is formed on the second substrate SUB2 in which the common electrode CE and the like are formed. The second alignment layer ALN2 may be formed by the substantially same method as the method of forming the first alignment layer ALN1. The second alignment layer ALN2 may comprise the same material as or a different material from the first alignment layer ALN1.

Thereafter, the first substrate SUB1 and the second substrate SUB2 are disposed to facing each other, and a liquid crystal layer LCL is formed between the first substrate SUB1 and the second substrate SUB2.

Next, light such as ultraviolet ray is applied to the liquid crystal layer LCL to cure the first functional group contained in the liquid crystal layer LCL. While light is applied to the liquid crystal layer LCL to cure the first functional group, an electric field may be applied to the liquid crystal layer LCL.

After light is irradiated and then a predetermined time elapses, the first functional groups are polymerized by ultraviolet ray. As a result, the first functional groups are polymerized on the first base alignment layer PAL1 while having a predetermined direction, and the second functional groups are polymerized on the second base alignment layer PAL2 while having a predetermined direction. The first and second alignment forming layers PTL1 and PTL2 may pretilt the liquid crystals LC by using the first and second polymerized functional groups.

In more detail, when an electric field is applied to the liquid crystal molecules, the first functional groups are arranged in the substantially same direction as the liquid crystal molecules around the first functional groups. When ultraviolet ray is irradiated in this state, the first functional groups are polymerized by the ultraviolet ray to form networks between the first functional groups. The first functional group may be coupled to another first functional group adjacent thereto to form a side chain. Herein, since the first functional groups form the network in a state that the liquid crystal molecules are arranged, the first functional groups have a specific directionality in an average alignment direction of liquid crystal molecules. Therefore, although the electric field is removed, the liquid crystal molecules adjacent to the network have a pretilt angle.

Next, the cured first functional group may be further cured in a state that the electric field is removed. The first functional group which is not cured in the curing may be additionally cured through the additional curing.

The liquid crystal display device which has the above-described structure and is manufactured by the above-described method may prevent the property of the liquid crystal from being changed. Thus, it is prevented that the voltage maintenance ratio of a pixel is reduced, and defects that may be caused by changes in the properties of liquid crystal, for example, a stain, a line-shaped afterimage, a face-shaped afterimage, or the like are reduced or removed.

While the present embodiments have been particularly shown and described with reference to example embodiments thereof, it will be understood by those of ordinary skill in the art that various changes in form and details may be made therein without departing from the scope of the present embodiments as defined by the following claims. Thus, the technical scope of the present embodiments is to be determined by the broadest permissible interpretation of the following claims and their equivalents, and shall not be restricted or limited by the foregoing detailed description.

Hereinafter, concrete examples of the present embodiments will be described.

### 1. Content of non-reacted reactive mesogen with baking temperature of alignment solution

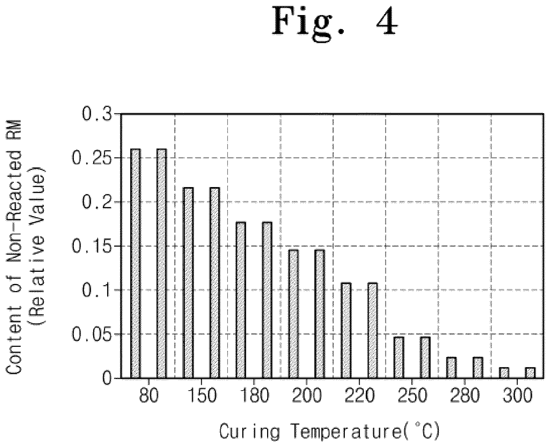

FIG. 4 is a graph showing the content of non-reacted reactive mesogen with temperature in a relative value when an alignment solution which employs a reactive mesogen as a first functional group is coated on a substrate and then the coated alignment solution is baked at different temperatures. The term "non-reacted reactive mesogen" means a state that a reactive mesogen does not react with other ions and/or radicals. The baking was performed two times at a single temperature, and the baking condition and time except for each temperature were maintained equally.

Referring to FIG. 4, when baking is performed at a higher temperature, the content of non-reacted reactive mesogen decreases. This means that the higher the heat energy supplied to the alignment layer, the more the reacted amount of the reactive mesogen, and the amount of the reactive mesogen to be reacted in the course of light irradiation decreases.

### 2. Content of non-reacted reactive mesogen after first baking and second baking

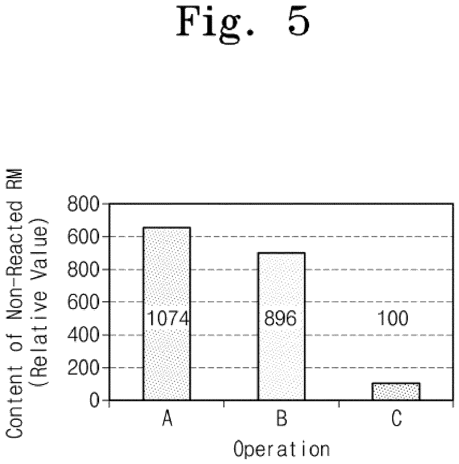

FIG. 5 is a graph showing the content of non-reacted reactive mesogen after baking in a relative value when an alignment solution which employs a reactive mesogen as a first functional group is coated on a substrate and then first baking and second baking are sequentially performed. In FIG. 5, step A indicates a point before the first baking and the second baking are performed, step B indicates a point after the first baking is performed, and step C indicates a point after the second baking is performed.

Referring to FIG. 5, the relative value of the non-reacted reactive mesogen in an initial alignment solution was 1074, was decreased to 896 after the first baking, and was sharply decreased to 100 after the second baking.

Therefore, there is a need to make sure that the reactive mesogen is not reacted as an additional reaction in a step of removing the solvent from the alignment solution and at the same time applying heat so as to react polymer precursor contained therein.

### 3. Content of non-reacted reactive mesogen and pretilt angle with content of heat stabilizer

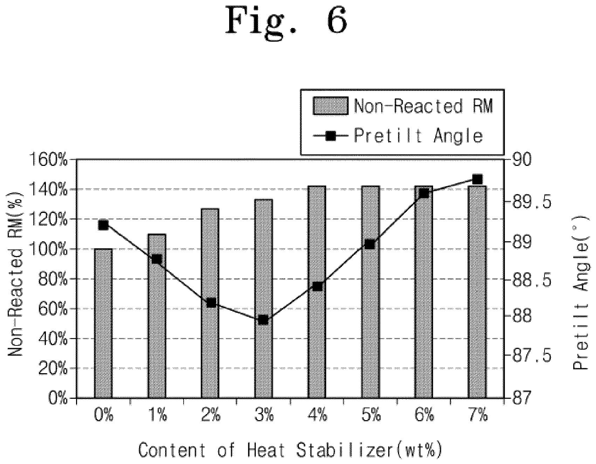

FIG. 6 is a graph showing the content of non-reacted reactive mesogen and the pretilt angle with the content of a heat stabilizer. In the graph of FIG. 6, the content of the non-reacted reactive mesogen was measured after the first baking and the second baking, and the pretilt angle was measured with respect to a final display device after the first baking, the second baking, the forming of the liquid crystal layer, and light irradiation were performed. Also, in the graph of FIG. 6, when an alignment solution that does not contain a heat stabilizer was used, the content of non-reacted reactive mesogen was represented as 100%.

Referring to FIG. 6, the content of the non-reacted reactive mesogen in the case where the heat stabilizer is contained is higher than that in the case where the heat stabilizer is not contained. In particular, the content of the non-reacted reactive mesogen increases in proportional to the content of the heat stabilizer until the content of the non-reacted reactive mesogen becomes about 4% by weight based on the total weight of the alignment solution. However, when the content of the non-reacted reactive mesogen exceeds about 4% by weight based on the total weight of the alignment solution, although the content of the heat stabilizer increases, the content of the non-reacted reactive mesogen does not increase.

Again referring to FIG. 6, compared with the case where the heat stabilizer is not contained, the pretilt in the case where the heat stabilizer is contained decreases until the content of the heat stabilizer becomes about 3% by weight based on the total weight of the alignment solution. However, when the content of the heat stabilizer becomes about 4% or more by weight based on the total weight of the alignment solution, the pretilt angle increases.

The phenomenon that the tilt angle increases is evaluated as being due to a fact that when the heat stabilizer exceeds about 3% by weight based on the total weight of the alignment solution, non-reacted heat stabilizer is not consumed in the course of the first baking and the second baking to hinder polymerization between reactive mesogens

### 4. Response rate depending on content of non-reacted reactive mesogen

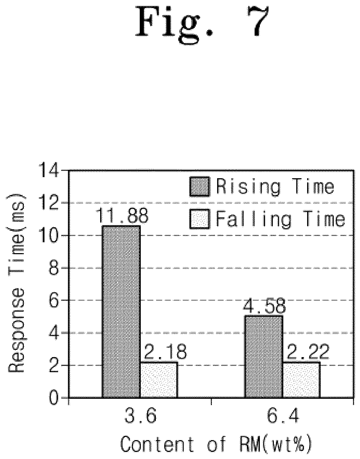

FIG. 7 is a graph showing a reaction rate of a final display device with the content of non-reacted reactive mesogen in the alignment layer after the first baking and the second baking. In FIG. 7, rising time and falling time indicate a time when the liquid crystal is transformed by an electric field, and a time when the transformed liquid crystal returs to an original state, respectively.

Referring to FIG. 7, it may be confirmed that the case where the content of the non-reacted reactive mesogen is high has little difference in falling time but is remarkably short in rising time, as compared with the case where the content of the non-reacted reactive mesogen is low. Therefore, in an embodiment, the heat stabilizer is used to increase the content of the non-reacted reactive mesogen, thus speeding up the reaction rate.

### 5. Slope of V-T graph with content of non-reacted reactive mesogen

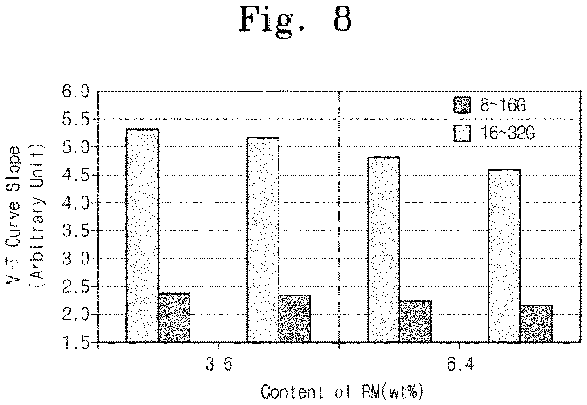

FIG. 8 is a graph showing an average slope in a voltage (V)-transmittance (T) curve depending on the content of non-reacted reactive mesogen. In the graph of FIG. 8, the content of the non-reacted reactive mesogen was measured after first baking and second baking were performed, and voltage and transmittance were measured with respect to the final display device. The slope was measured when the content of the non-reacted reactive mesogen was 3.6% by weight and 6.4% by weight based on the total weight of the alignment solution In FIG. 8, 8G to 16G and 16G to 32G indicate gray levels, and as the gray level approaches zero (0), it corresponds to a low gray scale.

Referring to FIG. 8, when the content of the non-reacted reactive mesogen is high, the slope at the high gray scale level (16G to 32G) is much lower than that at the low gray scale level (8G to 16G). Considering that the luminance difference in the low gray scale is more visible than that in the high gray scale by a user's eye, as the slope of the V-T curve is sharp, a variation width in luminance increases, and thus the possibility that a stain is visible is high. However, when the content of the non-reacted reactive mesogen is high as shown in FIG. 8, the slope in the low gray scale is greatly decreased, and thus the possibility that a stain is visible is low. That is, since the heat stabilizer is used in an embodiment, the content of the non-reacted reactive mesogen increases, so that a stain in the low gray scale decreases.

According to the embodiments, liquid crystal display devices have a rapid response rate, and less stain in the low gray scale.

The above-disclosed subject matter is to be considered illustrative, and not restrictive, and the appended claims are intended to cover all such modifications, enhancements, and other embodiments, which fall within the scope of the present embodiments. Thus, to the maximum extent allowed by law, the scope of the present embodiments is to be determined by the broadest permissible interpretation of the following claims and their equivalents, and shall not be restricted or limited by the foregoing detailed description.

## Claims

1. A method of manufacturing a liquid crystal display device, the method comprising:
forming a first substrate (SUB1);
forming a second substrate (SUB2);
coating an alignment solution solvent on each of the first and second substrates (SUB1, SUB2);
removing the solvent of the alignment solution to form an alignment layer (ALN1, ALN2);
the alignment solution containing an alignment material having a first functional group and a heat stabilizer, with the heat stabilizer being an antioxidant for preventing a reaction of the first functional group of the alignment material with radicals or ions during formation of the alignment layer (ALN1, ALN2);
forming a liquid crystal layer (LCL) between the first substrate (SUB1) and the second substrate (SUB2); and
irradiating light to the first functional group to polymerize the first functional group.

2. The method of claim 1, wherein the first functional group is a reactive mesogen, and the heat stabilizer is higher in reactivity with ions and/or radicals than the reactive mesogen.

3. The method of claim 1 or 2, wherein the heat stabilizer is contained in an amount of more than 0 but not more than about 3% by weight based on the total weight of the alignment solution.

4. The method of claim 3, wherein the removing of the solvent comprises a first baking step which is performed at a first temperature, and a second baking step which is performed at a second temperature different from the first temperature.

5. The method of claim 1 or 2, wherein the heat stabilizer is at least one of alkylated monophenol, alkylthiomethylphenol, hydroquinone and alkylated hydroquinone, tocopherol, hydroxylated thiodiphenyl ether, alkylidene bisphenol, O-benzyl compounds, N-benzyl compounds and S-benzyl compounds, hydroxybenzylated malonate, aromatic hydroxybenzyl compounds, benzylphosphonate, acylaminophenol, monovalent or polyvalent alcohols, esters of β-(3,5-di-tertiary-butyl-4-hydroxyphenyl) propionic acid with monovalent or polyvalent alcohols, esters of β-(5-tert-butyl-4-hydroxy-3-methylphenyl) propionic acid with monovalent or polyvalent alcohols, esters of β-(3,5-dicyclohexyl-4-hydroxyphenyl) propionic acid with monovalent or polyvalent alcohols, esters of 3,5-di-tert-butyl-4hydroxyphenyl acetic acid with monovalent or polyvalent alcohols, amides of β-(3,5-di-tert-butyl-4-hydroxyphenyl) propionic acid, ascorbic acids, and amine heat stabilizers.

6. The method of claim 1 or 2, further comprising forming an electrode part on at least one of the first substrate and the second substrate prior to the coating of the alignment solution, wherein an electric field is applied to the electrode part while the first functional group is polymerized.

7. The method of claim 1 or 2, wherein the first functional group is at least one of an alkylated vinyl group including an aliphatic alkyl group having 1 to 18 carbons, or an alkylated cinnamoyl group including an aliphatic alkyl group having 1 to 18 carbons.

8. The method of claim 7, wherein the first functional group is or 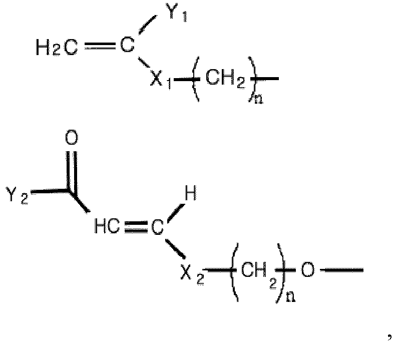 and wherein
n is 1 to 18,
X₁ is an alkyl group, an ether group or an ester group,
Y₁ is a methyl group or hydrogen,
X₂ is a methyl group, an ether group, an ester group, a phenyl group, a cyclohexyl group, or a phenylester group, and
Y₂ is at least one of an alkyl group having 1 to 10 carbons, a phenyl group, a biphenyl group, a cyclohexyl group, a bicyclohexyl group, or a phenylcyclohexyl group.

9. The method of claim 7, wherein the first functional group is 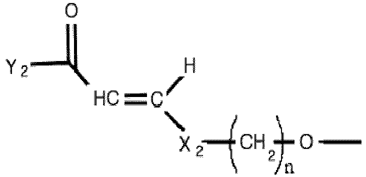 wherein
n is 1 to 18,
X₁ is an alkyl group, an ether group or an ester group,
Y₁ is a methyl group or hydrogen,
X₂ is a methyl group, an ether group, an ester group, a phenyl group, a cyclohexyl group, or a phenylester group, and
Y₂ is at least one of an alkyl group having 1 to 10 carbons, a phenyl group, a biphenyl group, a cyclohexyl group, a bicyclohexyl group, or a phenylcyclohexyl group.

10. The method of claim 1 or 2, wherein the alignment material further comprises a second functional group vertically aligning the liquid crystal molecules.

11. The method of claim 10, wherein the second functional group is at least one of an alkoxy group including an aliphatic alkyl group having 1 to 25 carbons, a cholesteric group, an alicyclic group including an aliphatic alkyl group having 1 to 10 carbons, or an aromatic group including an aliphatic alkyl group having 1 to 10 carbons.

## Patentansprüche

1. Verfahren zur Herstellung einer Flüssigkristallanzeigevorrichtung, wobei das Verfahren Folgendes umfasst:
Bilden eines ersten Substrats (SUB1);
Bilden eines zweiten Substrats (SUB2);
Auftragen eines Ausrichtungslösungslösemittels auf jedes von dem ersten und zweiten Substrat (SUB1, SUB2);
Entfernen des Lösemittels der Ausrichtungslösung, um eine Ausrichtungsschicht (ALN1, ALN2) zu bilden;
wobei die Ausrichtungslösung ein Ausrichtungsmaterial enthält, das eine erste Funktionsgruppe und einen Wärmestabilisator aufweist, wobei der Wärmestabilisator ein Antioxidans zur Verhinderung einer Reaktion der ersten Funktionsgruppe des Ausrichtungsmaterials mit Radikalen oder Ionen während der Bildung der Ausrichtungsschicht (ALN1, ALN2) ist;
Bilden einer Flüssigkristallschicht (LCL) zwischen dem ersten Substrat (SUB1) und dem zweiten Substrat (SUB2); und
Strahlen von Licht zu der ersten Funktionsgruppe, um die erste Funktionsgruppe zu polymerisieren.

2. Verfahren nach Anspruch 1, wobei die erste Funktionsgruppe ein reaktives Mesogen ist und der Wärmestabilisator eine höhere Reaktivität mit Ionen und/oder Radikalen als das reaktive Mesogen aufweist.

3. Verfahren nach Anspruch 1 oder 2, wobei der Wärmestabilisator in einer Menge von mehr als 0, aber nicht mehr als ungefähr 3 Gew.-% auf Grundlage des Gesamtgewichts der Ausrichtungslösung enthalten ist.

4. Verfahren nach Anspruch 3, wobei das Entfernen des Lösemittels einen ersten Brennschritt umfasst, der bei einer ersten Temperatur durchgeführt wird, und einen zweiten Brennschritt, der bei einer zweiten Temperatur durchgeführt wird, die sich von der ersten Temperatur unterscheidet.

5. Verfahren nach Anspruch 1 oder 2, wobei der Wärmestabilisator zumindest eines von alkyliertem Monophenol, Alkylthiomethylphenol, Hydroquinon und alkyliertem Hydroquinon, Tocopherol, hydroxyliertem Thiodiphenylether, Alkylidenbisphenol, O-Benzyl-Verbindungen, N-Benzyl-Verbindungen und S-Benzyl-Verbindungen, hydroxybenzyliertem Malonat, aromatischen Hydroxybenzylverbindungen, Benzylphosphonat, Acylaminophenol, monovalenten oder polyvalenten Alkoholen, Estern von β-(3,5-di-tertiär-Butyl-4-hydroxyphenyl)propionsäure mit monovalenten oder polyvalenten Alkoholen, Estern von β-(5-tert-Butyl-4-hydroxy-3-methylphenyl)propionsäure mit monovalenten oder polyvalenten Alkoholen, Estern von β-(3,5-Dicyclohexyl-4-hydroxyphenyl)propionsäure mit monovalenten oder polyvalenten Alkoholen, Estern von 3,5-di-tert-Butyl-4-hydroxyphenylessigsäure mit monovalenten oder polyvalenten Alkoholen, Amiden von β-(3,5-di-tert-Butyl-4-hydroxyphenyl)propionsäure, Ascorbinsäuren und Aminwärmestabilisatoren ist.

6. Verfahren nach Anspruch 1 oder 2, ferner umfassend das Bilden eines Elektrodenteils an zumindest einem von dem ersten Substrat und dem zweiten Substrat vor dem Beschichten der Ausrichtungslösung, wobei ein elektrisches Feld auf das Elektrodenteil angewandt wird, während die erste Funktionsgruppe polymerisiert wird.

7. Verfahren nach Anspruch 1 oder 2, wobei die erste Funktionsgruppe zumindest eine von einer alkylierten Vinylgruppe beinhaltend eine aliphatische Alkylgruppe, die 1 bis 18 Kohlenstoffe aufweist, oder einer alkylierten Cinnamoylgruppe beinhaltend eine aliphatische Alkylgruppe, die 1 bis 18 Kohlenstoffe aufweist, ist.

8. Verfahren nach Anspruch 7, wobei die erste Funktionsgruppe Folgende ist: 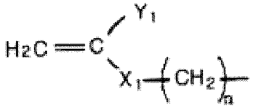 oder 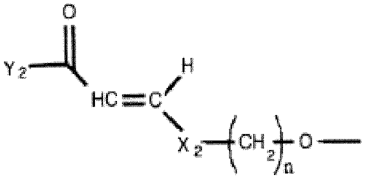 und wobei
n 1 bis 18 ist,
X₁ eine Alkylgruppe, eine Ethergruppe oder eine Estergruppe ist,
Y₁ eine Methylgruppe oder Wasserstoff ist,
X₂ eine Methylgruppe, eine Ethergruppe, eine Estergruppe, eine Phenylgruppe, eine Cyclohexylgruppe oder eine Phenylestergruppe ist, und
Y₂ zumindest eines von einer Alkylgruppe, die 1 bis 10 Kohlenstoffe aufweist, einer Phenylgruppe, einer Biphenylgruppe, einer Cyclohexylgruppe, einer Bicyclohexylgruppe oder einer Phenylcyclohexylgruppe ist.

9. Verfahren nach Anspruch 7, wobei die erste Funktionsgruppe Folgende ist: 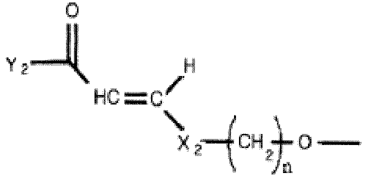 wobei
n 1 bis 18 ist,
X₁ eine Alkylgruppe, eine Ethergruppe oder eine Estergruppe ist,
Y₁ eine Methylgruppe oder Wasserstoff ist,
X₂ eine Methylgruppe, eine Ethergruppe, eine Estergruppe, eine Phenylgruppe, eine Cyclohexylgruppe oder eine Phenylestergruppe ist, und
Y₂ zumindest eines von einer Alkylgruppe, die 1 bis 10 Kohlenstoffe aufweist, einer Phenylgruppe, einer Biphenylgruppe, einer Cyclohexylgruppe, einer Bicyclohexylgruppe oder einer Phenylcyclohexylgruppe ist.

10. Verfahren nach Anspruch 1 oder 2, wobei das Ausrichtungsmaterial ferner eine zweite Funktionsgruppe umfasst, die die Flüssigkristallmoleküle vertikal ausrichtet.

11. Verfahren nach Anspruch 10, wobei die zweite Funktionsgruppe zumindest eine von einer Alkoxygruppe beinhaltend eine aliphatische Alkylgruppe, die 1 bis 25 Kohlenstoffe aufweist, einer cholesterischen Gruppe, einer alicyclischen Gruppe beinhaltend eine aliphatische Alkylgruppe, die 1 bis 10 Kohlenstoffe aufweist, oder einer aromatischen Gruppe beinhaltend eine aliphatische Alkylgruppe, die 1 bis 10 Kohlenstoffe aufweist, ist.

## Revendications

1. Procédé de fabrication d'un dispositif d'affichage à cristaux liquides, le procédé comprenant :
la formation d'un premier substrat (SUB1) ;
la formation d'un second substrat (SUB2) ;
le revêtement d'un solvant de solution d'alignement sur chacun des premier et
second substrats (SUB1, SUB2) ;
l'élimination du solvant de la solution d'alignement pour former une couche d'alignement (ALN1, ALN2) ;
la solution d'alignement contenant un matériau d'alignement ayant un premier groupe fonctionnel et un stabilisant thermique, le stabilisant thermique étant un antioxydant pour empêcher une réaction du premier groupe fonctionnel du matériau d'alignement avec des radicaux ou ions pendant la formation de la couche d'alignement (ALN1, ALN2) ;
la formation d'une couche de cristaux liquides (LCL) entre le premier substrat (SUB1) et le second substrat (SUB2) ; et
l'irradiation de lumière sur le premier groupe fonctionnel pour polymériser le premier groupe fonctionnel.

2. Procédé selon la revendication 1, dans lequel le premier groupe fonctionnel est un mésogène réactif, et le stabilisant thermique a une réactivité plus élevée avec les ions et/ou radicaux que le mésogène réactif.

3. Procédé selon la revendication 1 ou 2, dans lequel le stabilisant thermique est contenu à hauteur de plus de 0 mais pas plus d'environ 3 % en poids rapporté au poids total de la solution d'alignement.

4. Procédé selon la revendication 3, dans lequel l'élimination du solvant comprend une première étape de cuisson qui est réalisée à une première température, et une seconde étape de cuisson qui est réalisée à une seconde température différente de la première température.

5. Procédé selon la revendication 1 ou 2, dans lequel le stabilisant thermique est l'un parmi un monophénol alkylée, l'alkylthiométhylphénol, l'hydroquinone et l'hydroquinone alkylé, le tocophérol, le thiodiphényl éther hydroxylé, un alkylidène bisphénol, des composés O-benzyle, des composés N-benzyle et des composés S-benzyle, le malonate hydroxybenzylé, des composés hydroxybenzyle aromatiques, le phosphonate de benzyle, l'acylaminophénol, des alcools monovalents ou polyvalents, des esters d'acide β-(3,5-di-tertiaire-butyl-4-hydroxyphényl) propionique avec des alcools monovalents ou polyvalents, des esters d'acide β-(5-tert-butyl-4-hydroxy-3-méthylphényl) propionique avec des alcools monovalents ou polyvalents, des esters d'acide β-(3,5-dicyclohexyl-4-hydroxyphényl) propionique avec des alcools monovalents ou polyvalents, des esters d'acide 3,5-di-tert-butyl-4-hydroxyphényl acétique avec des alcools monovalents ou polyvalents, des amides d'acide β-(3,5-di-tert-butyl-4-hydroxyphényl) propionique, des acides ascorbiques, et des stabilisants thermiques amines.

6. Procédé selon la revendication 1 ou 2, comprenant en outre la formation d'une partie d'électrode sur au moins l'un du premier substrat et du second substrat avant le revêtement de la solution d'alignement, dans lequel un champ électrique est appliqué à la partie d'électrode pendant que le premier groupe fonctionnel est polymérisé.

7. Procédé selon la revendication 1 ou 2, dans lequel le premier groupe fonctionnel est au moins l'un d'un groupe vinyle alkylé incluant un groupe alkyle aliphatique comportant 1 à 18 atomes de carbone, ou un groupe cinnamoyle alkylé incluant un groupe alkyle aliphatique comportant 1 à 18 carbones.

8. Procédé selon la revendication 7, dans lequel le premier groupe fonctionnel est 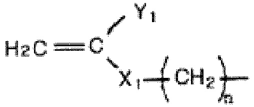 ou 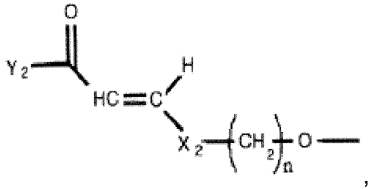 et dans lequel
n vaut 1 à 18,
X₁ est un groupe alkyle, un groupe éther ou un groupe ester,
Y₁ est un groupe méthyle ou un hydrogène,
X₂ est un groupe méthyle, un groupe éther, un groupe ester, un groupe phényle, un groupe cyclohexyle, ou un groupe phénylester, et
Y₂ est au moins l'un d'un groupe alkyle comportant 1 à 10 carbones, un groupe phényle, un groupe biphényle, un groupe cyclohexyle, un groupe bicyclohexyle, ou un groupe phénylcyclohexyle.

9. Procédé selon la revendication 7, dans lequel le premier groupe fonctionnel est 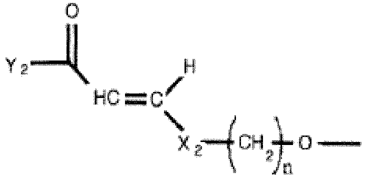 dans lequel
n vaut 1 à 18,
X₁ est un groupe alkyle, un groupe éther ou un groupe ester,
Y₁ est un groupe méthyle ou un hydrogène,
X₂ est un groupe méthyle, un groupe éther, un groupe ester, un groupe phényle, un groupe cyclohexyle, ou un groupe phénylester, et
Y₂ est au moins l'un d'un groupe alkyle comportant 1 à 10 carbones, un groupe phényle, un groupe biphényle, un groupe cyclohexyle, un groupe bicyclohexyle, ou un groupe phénylcyclohexyle.

10. Procédé selon la revendication 1 ou 2, dans lequel le matériau d'alignement comprend en outre un second groupe fonctionnel alignant verticalement les molécules de cristaux liquides.

11. Procédé selon la revendication 10, dans lequel le second groupe fonctionnel est au moins l'un d'un groupe alcoxy incluant un groupe alkyle aliphatique comportant 1 à 25 carbones, un groupe cholestérique, un groupe alicyclique incluant un groupe alkyle aliphatique comportant 1 à 10 carbones, ou un groupe aromatique incluant un groupe alkyle aliphatique comportant 1 à 10 carbones.
